# EUROPEAN PATENT APPLICATION

(11) **EP 4 763 609 A1**
(43) Date of publication of application: **24.06.2026**
(21) Application number: 25224776.2
(22) Date of filing: 18.12.2025
(51) Int. Cl.: B60N 2/879, H04R 1/02, B60N 2/58, B60N 2/60, B60R 11/02, B60N 2/70, B60N 2/803

(54) **SOUND-EMITTING DEVICE AND PROCEDURE FOR ASSEMBLING A SOUND-EMITTING DEVICE**

(30) Priority: 19.12.2024 ES 202431077
(71) Applicant: Seat, S.A., 08760 Martorell - Barcelona (ES)
(72) Inventor: Toyas Ruiz, Alberto, Martorell (ES)
(74) Representative: Pons IP

(57) **Abstract**

This invention relates to a sound-emitting device and to a procedure for assembling said device in a seat, in such a way that it is possible to obtain optimal sound quality from said device arranged in the seat, preferably in the seat of a motor vehicle, while preventing the creation of noise near the user's auricular pavilion when occupying said seat, since the sound-emitting device comprises an actuator set up to emit sound that is arranged in contact exclusively with third elements via the surface that radiates the sound.

## Description

### OBJECT OF THE INVENTION

This invention relates to a sound-emitting device and to a procedure for assembling said device in a seat, in such a way that it is possible to obtain optimal sound quality from said device arranged in the seat, preferably in the seat of a motor vehicle.

The sound-emitting device prevents the creation of noise near the user's auricle occupying said seat because the sound-emitting device comprises an actuator set up to emit sound, which is arranged in contact only with third elements through the surface radiating the sound.

### BACKGROUND OF THE INVENTION

Sound-emitting devices or loudspeakers integrated into a motor vehicle seat are known in the prior art, and more specifically, integrated into a headrest of the motor vehicle seat.

With such integration of the loudspeaker into the headrest of the motor vehicle seat, the aim is to improve the driving and sound experience inside the vehicle, allowing the driver or passenger to receive customized or directional sound signals, that is, sound that is mainly heard by the occupant of the seat and not by the rest of the occupants of the vehicle interior.

For example, document EP3964388A1 discloses a sound-emitting device that integrates two actuators in the headrests of the motor vehicle seat through a transfer element or membrane in order to improve sound quality, wherein each of the two actuators is arranged in the seat such that each actuator has its excitation surface inside a cover of the head support surface or inside a lining of the backrest surface.

This device shows an assembly-related issue, since the transfer element or membrane is arranged in contact with a padding material of the seat, which causes vibrations to be transmitted to said seat, because the transfer element receives the intrinsic vibrations of the actuator, reducing sound quality. This creates noise or distortion that results in poor sound quality. When the actuator is integrated into the headrest of the seat, such noise or distortion occurs in an area very close to the user's auricle, creating discomfort for the driver or passenger.

The sound-emitting device and the procedure for assembling said device in a seat of this invention solve all the aforementioned drawbacks.

### DESCRIPTION OF THE INVENTION

This invention relates to a sound-emitting device and to a procedure for assembling said device in a seat, in such a way that it is possible to obtain optimal sound quality from said device arranged in the seat, preferably in the seat of a motor vehicle.

The sound-emitting device comprises:
- a seat which, in turn, comprises:
- a backrest surface and a headrest surface, the backrest surface and headrest surface being understood as those surfaces of the backrest and of the headrest that are likely to contact the seat occupant, and
- a cover over the backrest surface and/or the headrest surface, said cover comprising an internal surface;
- at least one actuator set up to emit sound, comprising:
- an excitation surface, the at least one actuator being arranged in the backrest and/or the headrest with the excitation surface facing the internal surface of the cover;
- at least one transfer element arranged between the excitation surface and the internal surface of the cover; and
- first fastening means arranged between the at least one transfer element and the internal surface of the cover over the backrest surface and/or the headrest surface.

In this way, the sound-emitting device set up as described prevents the creation of noise near the auricle of the user occupying said seat because the at least one actuator is arranged in contact with the at least one transfer element through the excitation surface, which is the surface that radiates the sound, wherein the at least one transfer element is joined only to the internal surface of the cover over the backrest surface and/or the headrest surface.

Thus, the support surface of the at least one transfer element is essentially limited to the internal surface of the cover, so that the at least one transfer element is isolated from the seat.

The transfer element is preferably designed such that, both in its shape and in its mechanical vibration properties-for example, regarding its mass, stiffness and/or damping-the transfer element influences, in particular due to its material properties and/or geometry, the radiation directed toward the cover regarding a specific energy efficiency and/or the bandwidth of the emitted frequency. Depending on its specific set up, the transfer element may act as an impedance converter.

In this way, improved transmission of the vibrations from the actuator to the cover of the headrest surface and/or the backrest surface is achieved.

Optionally, the at least one actuator is arranged in direct contact with the at least one transfer element. Preferably, the excitation surface is arranged in direct contact with the at least one transfer element.

Optionally, the at least one transfer element is arranged in contact with the internal surface of the cover through the first fastening means. Thus, the only part of the at least one actuator in contact with a seat element is the excitation surface.

Optionally, the at least one transfer element comprises a surface larger than the excitation surface, such that the whole excitation surface is covered by the at least one transfer element. In any case, the at least one transfer element never contacts other parts of the at least one actuator, except the excitation surface.

Optionally, the cover is independently over the backrest surface and the headrest surface. That is, a first cover is over the backrest surface and a second cover, isolated from the first one, is over the headrest surface.

Optionally, the cover is simultaneously over the backrest surface and the headrest surface, as in a bucket-type seat.

Optionally, the first fastening means are set up to keep the at least one transfer element and the internal surface of the cover over the backrest surface and/or the headrest surface in contact.

Optionally, the seat comprises padding material which, in turn, comprises at least one cavity set up to house the at least one actuator. Thus, the at least one actuator is housed in the cavity without contacting said cavity. Preferably, the at least one transfer element is isolated-meaning not in contact, at least partially-from the padding material. The padding includes the backrest surface and the headrest surface.

Optionally, the at least one actuator comprises a rear surface facing the cavity of the padding material, wherein the rear surface of the at least one actuator is at least partially isolated from the padding material.

Optionally, the at least one transfer element comprises a front face set up to face the internal surface of the cover, a rear face set up to face and contact the excitation surface of the at least one actuator, and a peripheral edge arranged between the front face and the rear face, wherein either the rear face or the peripheral edge is isolated from the padding material. Preferably, the peripheral edge of the at least one transfer element comprises at least one fastening tab set up to be housed in a recess of the cavity of the padding material and to position, at least temporarily, the transfer element and actuator regarding the cavity of the padding material. Once the transfer element is joined by means of the fastening means to the internal surface of the cover, said at least one fastening tab becomes disengaged from the pertinent recess of the cavity of the padding material. This constitutes a positioning system used only during the assembly phase. Said contact between the at least one fastening tab and the pertinent recess disappears once the actuator and transfer element assembly is placed in its working position.

Alternatively, the padding material comprises at least one projection arranged on the wall defining the cavity and set up to support the peripheral edge of the at least one transfer element and to position, at least temporarily, the transfer element and the actuator regarding the cavity of the padding material.

In this way, by means of this temporary positioning, it is ensured that the arrangement of the at least one actuator and, more specifically, of the at least one transfer element, is appropriate in the seat, so that the correct joining of the cover over the backrest surface and/or the headrest surface to the at least one transfer element by means of the first fastening means may be carried out during the cover assembly process.

Optionally, the first fastening means are adhesive fastening means.

Optionally, the first fastening means are arranged on the at least one transfer element. Thus, during the assembly operation, the first fastening means are joined to the pertinent transfer element and are set up to be linked and joined to the internal surface of the cover, whether of the backrest or the headrest.

According to said embodiment, the device further comprises a protective layer for the first fastening means, the protective layer being set up to be removed from the first fastening means once the internal surface of the cover over the backrest surface and/or the headrest surface is arranged over the first fastening means. Thus, during the assembly phase, and once the cover is correctly positioned relative to the padding material, the protective layer is removed, so that the first fastening means are joined to the internal surface of the cover, whether of the backrest or the headrest, mechanically linking the transfer element to said cover.

Optionally, and as an alternative to the previous embodiment, the first fastening means are arranged on the cover over the backrest surface and/or the headrest surface. Thus, during the assembly operation, the first fastening means are joined to the internal surface of the cover, whether of the backrest or the headrest, and are set up to be linked and joined to the transfer element.

According to said embodiment, the device further comprises a protective layer for the first fastening means, the protective layer being set up to be removed from the first fastening means once the internal surface of the cover over the backrest surface and/or the headrest surface is arranged over the first fastening means. Thus, during the assembly phase, and once the cover is correctly positioned relative to the padding material, the protective layer is removed, so that the first fastening means are joined to the transfer element, mechanically linking said transfer element to the internal surface of the cover, whether of the backrest or the headrest.

Preferably, the protective layer comprises a first section set up to be arranged, in a removable way, over the first fastening means, and a second section set up to remain accessible through the cover, preferably through a slot or an end of said cover. Therefore, in an assembly position of the cover, that is, covering the padding material, at least a part of said second section protrudes from the cover-that is, it is not arranged between the cover and the padding material-so an operator may pull on said second section, applying a traction force, in order to remove the protective layer, as will be explained below. In addition, the protective layer may comprise a third section set up to be temporarily secured to the padding material of the seat.

Optionally, the device comprises second fastening means set up to temporarily secure the third section of the protective layer to the padding material of the seat. In this way, the protective layer is temporarily secured to the padding material until the seat cover has been fitted. As the second section remains accessible through the cover, an operator may pull said second section to remove the protective layer. The second fastening means are reversible and set up such that, upon applying said traction force, the fastening between the third section of the protective layer and the padding material of the seat is undone. As a result, once the protective layer is removed, the cover becomes joined to the at least one transfer element through the first fastening means, which are thus disposed between the at least one transfer element and the internal surface of the cover over the backrest surface and/or the headrest surface. Preferably, the second fastening means are a removable adhesive or a non-permanent fastening means, allowing the protective layer to be easily removed from the seat.

Optionally, the protective layer comprises folding lines between the first section and the third section and/or between the second section and the third section, wherein the second section is also set up to be arranged over the first section, between the internal surface of the cover and the first section, and wherein the first section is set up to be arranged between the second section and the first fastening means.

Optionally, the first section of the protective layer is set up not to be joined, preferably not permanently, to the first fastening means, so that the first section arranged in a removable way over the first fastening means is easily removable. This is because the first section is made of a first material that is at least partially incompatible with the first fastening means. In addition, when the first fastening means are adhesive fastening means, the cover adheres directly to the first fastening means once the protective layer is removed, also ensuring the isolation of the at least one transfer element from the seat.

Optionally, the protective layer comprises centering means set up to center the cover relative to the protective layer. Preferably, the centering means are arranged on the third section. Thus, the correct placement of the cover on the seat in the area of the at least one sound actuator may be ensured.

Optionally, the centering means are set up to center the protective layer relative to the at least one transfer element. Thus, the correct placement of the protective layer on the at least one sound actuator may be ensured.

The invention also relates to a procedure for installing the sound-emitting device described above, comprising:
- a step of arranging the at least one actuator and the at least one transfer element in the seat;
- a step of placing the first fastening means on the at least one transfer element or on the cover;
- a step of assembling the cover on the backrest surface and/or the headrest surface of the seat; and
- a step of joining the at least one transfer element and the internal surface of the cover of the backrest surface and/or the headrest surface by means of the first fastening means.

Optionally, the step of arranging the at least one actuator and the at least one transfer element in the seat comprises a step of coupling at least one fastening tab of the at least one transfer element into a recess of the cavity of the padding material.

Optionally, the step of arranging the at least one actuator and the at least one transfer element in the seat comprises a step of supporting the peripheral edge of the at least one transfer element on the at least one projection of the padding material.

The procedure further comprises a step of placing a protective layer over the first fastening means, said step of placing the protective layer occurring prior to the step of assembling the cover on the backrest surface and/or the headrest surface of the seat.

Optionally, the step of placing the protective layer over the first fastening means further comprises a step of temporarily fastening a third section of the protective layer to the padding material of the seat. Preferably, the step of placing the protective layer over the first fastening means further comprises a step of placing a second section of the protective layer over the first section of the protective layer such that the second section is arranged between the internal surface of the cover and the first section, and the first section is arranged between the second section and the first fastening means.

Optionally, the procedure further comprises a step of removing the protective layer from the first fastening means once the step of assembling the cover on the backrest surface and/or the headrest surface of the seat has been completed.

### DESCRIPTION OF THE FIGURES

To complement the description provided above and to facilitate a better understanding of the characteristics of the invention according to a preferred practical embodiment thereof, a set of drawings is attached as an integral part of said description, which, by way of illustration and without limiting the scope of the invention, shows the following:
Figure 1 shows a perspective view of the seat with two cavities intended to house two actuators with their transfer elements of the sound-emitting device of this invention, the actuators being arranged outside the cavities.
Figure 2 shows a perspective view of Figure 1 once the actuators with their transfer elements have been housed in the cavities of the seat.
Figure 3 shows a front perspective view of the protective layer of the first fastening means.
Figure 4 shows a rear perspective view of the protective layer of the first fastening means.
Figure 5 shows a detail of the step of placing the third section of the protective layer on the filling material of the seat, by way of the second fastening means.
Figure 6 shows a detail of the step of placing the first section of the protective layer on the first fastening means.
Figure 7 shows a detail of the step of placing the second section of the protective layer on the first section.
Figure 8 shows a perspective view of the seat of the sound-emitting device of this invention prior to the step of removing the protective layer of the first fastening means once the step of assembling the cover has been completed.
Figure 9 shows a perspective view of the seat of the sound-emitting device of this invention once the step of joining at least one transfer element and the internal surface of the cover of the headrest surface by means of the first fastening means has been carried out.

### PREFERRED EMBODIMENT OF THE INVENTION

Below, there is a detailed description of the sound-emitting device, which comprises:
- a seat (1) which, in turn, comprises:
   - a backrest surface (3) and a headrest surface (4), and
   - a cover (5) over the backrest surface (3) and/or the headrest surface (4), said cover (5) comprising an internal surface (6);
   - at least one actuator (7) set up to emit sound, comprising:
      - an excitation surface (8), the at least one actuator (7) being arranged in the backrest (3) and/or the headrest (4) with the excitation surface (8) facing the internal surface (6) of the cover (5);
      - at least one transfer element (9) arranged between the excitation surface (8) and the internal surface (6) of the cover (5); and
      - first fastening means (10) arranged between the at least one transfer element (9) and the internal surface (6) of the cover (5) over the backrest surface (3) and/or the headrest surface (4).

As noted in the figures, and for this non-limiting example, the cover (5) is a single component that is over the backrest surface (3) and the headrest surface (4), said cover (5) comprising an internal surface (6). The cover (5) is set up to enclose a filling material (11), the cover (5) being inserted at one end of the filling material (11)-specifically, the filling material (11) that forms the headrest (4)- and sliding along said filling material (11) toward the opposite end of the backrest. This assembly set up creates the issue that, once the cover (5) is positioned over the filling material (11), it is no longer possible to access or handle the internal components, such as the actuators (7), for their correct positioning and joining.

The device comprises two actuators (7) with their pertinent excitation surfaces (8) arranged in the headrest (4), with the excitation surface (8) facing the internal surface (6) of the cover (5), and with a transfer element (9) arranged between each excitation surface (8) and the internal surface (6) of the cover (5). Each actuator (7) has first fastening means (10) arranged between each transfer element (9) and the internal surface (6) of the cover (5) that is over the surface of the headrest (4), in order to join both components, as described below.

In this embodiment, the actuators (7) are arranged in direct contact with the respective transfer elements (9) through their excitation surface (8).

Each transfer element (9) is arranged in contact with the internal surface (6) of the cover (5) by means of the first fastening means (10).

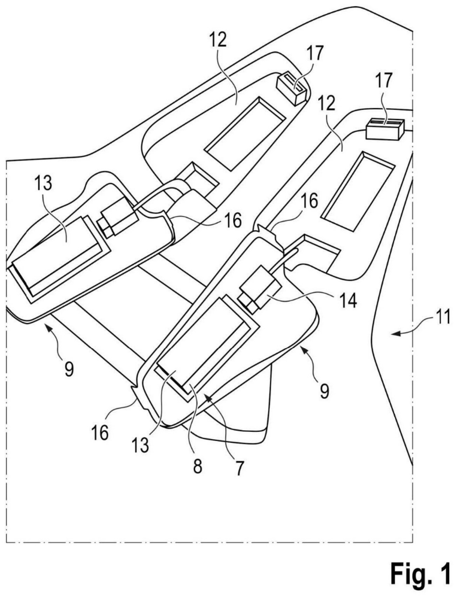

As shown in Figure 1, the transfer elements (9) comprise a surface larger than the excitation surface (8), such that the whole excitation surface (8) is covered by the pertinent transfer element (9).

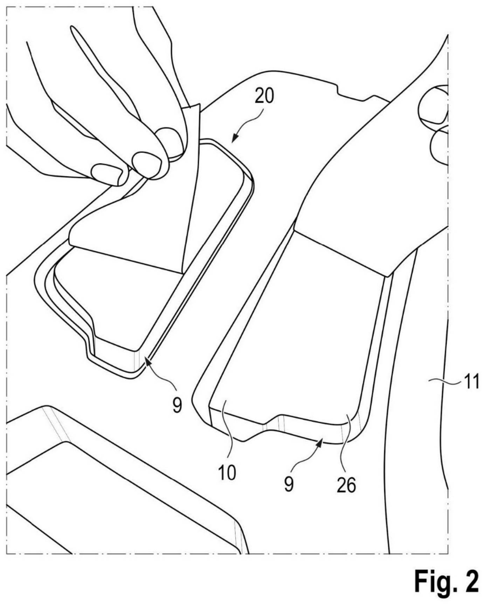

Preferably, the seat (1) comprises a filling material (11)which, in turn, comprises two cavities (12) in this embodiment, as noted in Figures 1 and 2, said cavities (12) being set up to house each of the actuators (7) without any contact between the actuator (7) and the cavity (12) of the filling material (11). Each actuator (7) comprises a rear surface (13) facing each cavity (12) of the filling material (11), the rear surface (13) being isolated from the filling material (11).

As noted in Figures 1 and 2, each transfer element (9) comprises a front face (26) set up to face the internal surface (6) of the cover (5), a rear face (14) set up to face and contact the excitation surface (8) of each actuator, and a peripheral edge (15) arranged between the front face (26) and the rear face (14). The rear face (14) is isolated from the filling material (11) and comprises two fastening tabs (16), as noted in Figure 1, set up to be housed in both recesses (17) of the cavities (12) of the filling material (11) and to position, at least temporarily, the transfer element (9) and the actuator (7) regarding the cavity (12) of the filling material (11).

This temporary positioning ensures the proper arrangement of the actuators (7) and transfer elements (9) in the seat, so that the cover (5) that is over the backrest surface (3) and/or the headrest surface (4) may be correctly joined to the transfer elements (9) through the first fastening means (10) when the cover (5) is assembled onto the seat (1).

In this embodiment, the first fastening means (10), which are adhesive and are arranged on the transfer elements (9), are set up to keep the transfer elements (9) and the internal surface (6) of the cover (5) that is over the headrest surface (4) in contact and joined together. Thus, as shown in Figure 2, once the actuators (7) are arranged in their pertinent cavity (12), a removable layer of said first fastening means (10), which are adhesive material, is removed according to the preferred embodiment described.

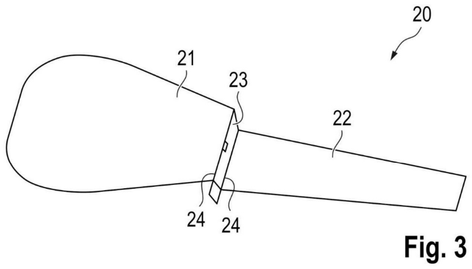

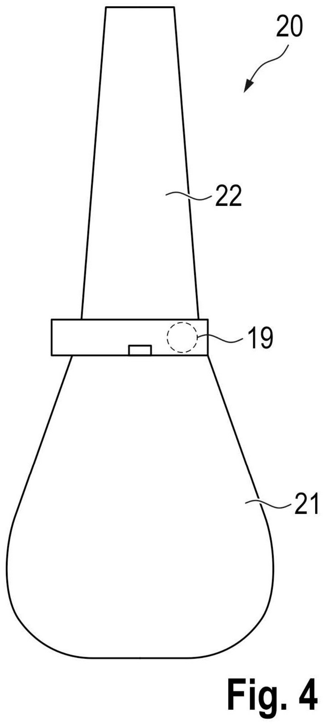

Figures 3 to 6 show a protective layer (20) of the first fastening means (10), wherein the protective layer (20) is set up to be removed from the first fastening means (10) once the internal surface (6) of the cover (5) that is over the headrest surface (4) is arranged over the first fastening means (10).

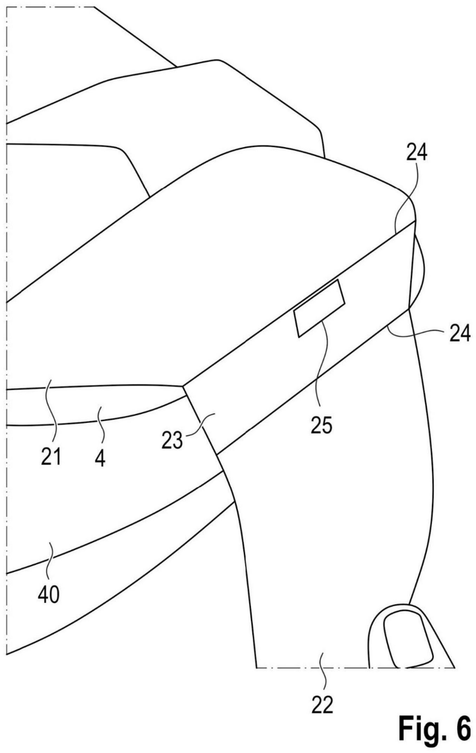

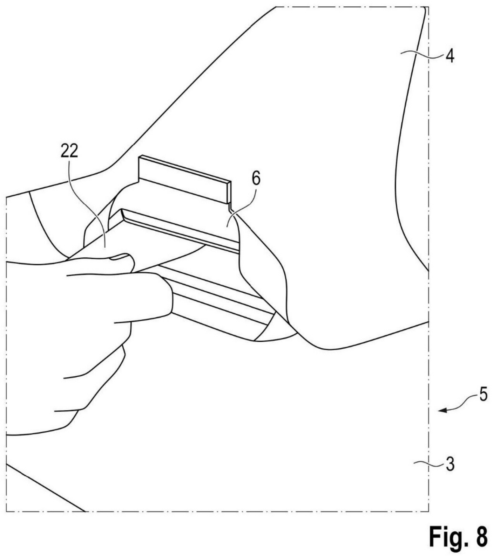

The protective layer (20) comprises a first section (21) set up to be arranged, in a removable way, on the first fastening means (10), a second section (22) set up to remain accessible through the cover (5), via a slot (18) of said cover (5), as noted in Figure 8, and a third section (23) set up to be temporarily secured to the filling material (11) of the seat (1), as noted in Figure 6. In this embodiment, this third section (23) is secured to the filling material (11) of the seat (1) by second fastening means (19).

In this way, the protective layer (20) is temporarily secured to the filling material (11) until the cover (5) of the seat (1) has been fitted over the filling material (11), thereby allowing the second section (22) to remain accessible through the cover to remove said protective layer (20), and consequently to join the cover (5) to the transfer elements (9) by means of the first fastening means (10).

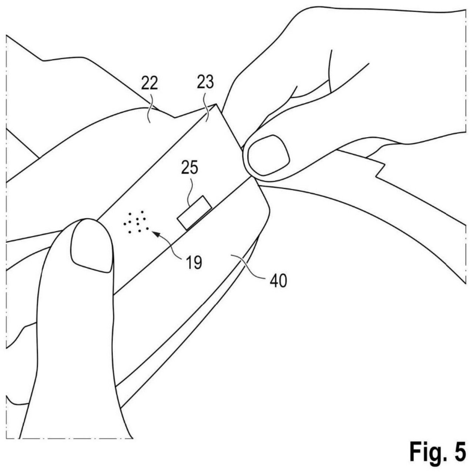

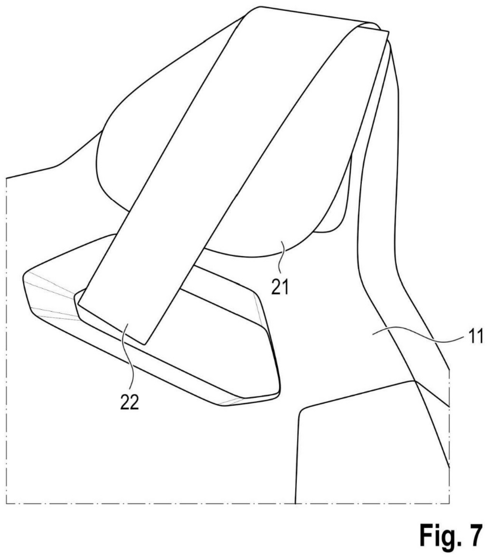

In this embodiment, the protective layer (20) comprises folding lines (24) between the first section (21) and the third section (23), and between the second section (22) and the third section (23), so that the second section (22) may be arranged over the first section (21), as noted in Figure 7. In addition, the protective layer (20) comprises centering means (25) set up to center the cover (5) relative to the protective layer (20) and to center the protective layer relative to the transfer elements (9), as noted in Figure 5.

The installation procedure of the sound-emitting device according to this invention is described below, comprising:
- a step of arranging two actuators (7) with their pertinent transfer elements (9) in the filling material (11) of the seat (1), as noted in Figures 1 and 2;
- a step of placing the first fastening means (10) on the transfer elements (9), wherein said first fastening means (10) had already been placed on the transfer elements (9) shown in Figure 2, and are protected by a protective sheet (20) until the installation of the sound-emitting device;
- a step of assembling the cover (5) on the backrest surface (3) and the headrest surface (4) of the seat (1); and
- a step of joining the transfer elements (9) and the internal surface (6) of the cover (5) of the headrest surface (4) by means of the first fastening means (10).

Preferably, the step of arranging the two actuators (7) with their pertinent transfer elements (9) in the filling material (11) of the seat (1) comprises a step of temporarily coupling two fastening tabs (16) of each transfer element (9) into both recesses (17) of each cavity (12) of the filling material (11). This temporary coupling is released once the step of joining the transfer elements (9) and the inner surface (6) of the cover (5) of the headrest surface (4) by means of the first fastening means (10) is carried out.

The pre-assembly position of the actuators (7) shown in Figure 2 corresponds to a step of positioning and centering them relative to the filling material (11). It is important to emphasize that both the actuator (7) and the pertinent transfer element (9) shall be isolated from the filling material (11). This means that both the rear surface (13) of the actuator (7) and the rear face (14) and peripheral edge (15) of the transfer element (9) shall avoid contact with the filling material (11) in their use position. Their positioning shall be "floating" relative to the filling material (11), such that only the front face (26) of the transfer element (9) is in contact with the internal surface (6) of the cover (5). "Floating" is understood as having an air gap of approximately 2 mm regarding the filling material (11). This set up ensures optimal sound quality.

The procedure further comprises a step of placing a protective layer (20) over the first fastening means (10), said step of placing the protective layer (20) occurring prior to the step of assembling the cover (5) on the backrest surface (3) and/or the headrest surface (4) of the seat.

Thus, once the cover (5) is positioned covering the filling material (11), a step of removing the protective layer (20) from the first fastening means (10) is performed. Then, the transfer elements (9) and the internal surface (6) of the cover (5) of the headrest surface (4) are joined by means of the first fastening means (10).

As shown in Figure 5, and with the cover (5) not yet arranged covering the filling material (11), the protective layer (20) is positioned. Thus, the step of placing the protective layer (20) on the first fastening means (10) further comprises a step of temporarily securing a third section (23) of the protective layer (20) to the filling material (11) of the seat (1), preferably to an upper edge (40) of the filling material (11) of the seat (1). More specifically, it comprises joining said third section (23) of the protective layer (20) to the upper edge (40) of the filling material (11) by means of second fastening means (19). Said second fastening means (19) are reversible, allowing the protective layer (20) to remain secured to the filling material (11) during the operation of assembling the cover (5) onto the filling material (11), while also allowing removal of said protective layer (20) when a pulling force is applied to the second section (22) of the protective layer (20). For example, said second fastening means (19) may be an adhesive located on said third section (23) of the protective layer (20).

In order to ensure that the protective layer (20) is correctly positioned on the filling material (11), both components include centering elements, such as the centering element (25) shown in Figure 5.

Once the protective layer (20) is secured to the filling material (11), the assembly procedure optionally includes a step of placing the second section (22) of the protective layer (20) over the first section (21) of the protective layer (20), such that the second section (22) is arranged between the internal surface (6) of the cover (5) and the first section (21), and the first section (21) is arranged between the second section (22) and the first fastening means (10), as shown in Figure 7. The material of the protective layer (20), and more specifically the material of the first section (21) of the protective layer (20), is incompatible with the first fastening means (10). Thus, even though the first section (21) of the protective layer (20) is in contact with the first fastening means (10), no permanent securing occurs between them. Therefore, during the operation of assembling the cover (5) onto the filling material (11), the protective layer (20) remains arranged between the cover (5) and the filling material (11), preventing permanent securing between them.

Subsequently, as shown in Figure 8, the assembly procedure optionally includes a step of removing the protective layer (20). Specifically, the operator applies a pulling force to the second section (22) of the protective layer (20) in order to remove said protective layer (20). This pulling force is enough to detach the second fastening means (19) from the upper edge (40) of the filling material (11), allowing the first fastening means (10) to irreversibly secure the internal surface (6) of the cover (5) to the transfer element (9). The pulling force applied to the second section (22) of the protective layer (20) may be applied because at least a part of said second section (22) is accessible to the operator, for example, through a slot created in the cover (5).

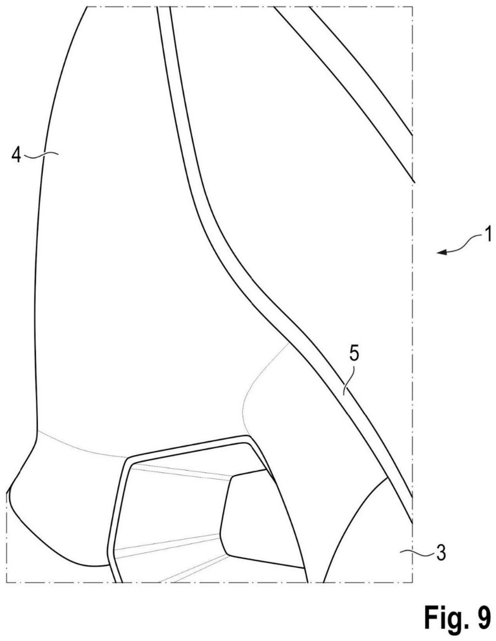

Once the protective layer (20) is removed, the cover (5) is secured to the transfer element (9) by means of the first fastening means (10), as shown in Figure 9. It is noted that, during this securing, the assembly formed by the transfer element (9) and its pertinent actuator (7) is pushed toward the cover (5), separating both the rear surface (13) of the actuator (7) and the rear face (14) of the transfer element (9) from the filling material (11), ensuring optimal sound quality for the seat occupant.

## Claims

1. Sound-emitting device comprising:
- a seat (1) which, in turn, comprises:
- a backrest surface (3) and a headrest surface (4),
- a cover (5) over the backrest surface (3) and/or the headrest surface (4), said cover (5) comprising an internal surface (6),
- a filling material (11) which, in turn, comprises at least one cavity (12) set up to house at least one actuator (7) set up to emit sound;
- the at least one actuator (7) which, in turn, comprises:
- an excitation surface (8), wherein the at least one actuator (7) is arranged in the at least one cavity (12) of the filling material (11) of the backrest (3) and/or the headrest (4), with the excitation surface (8) facing the internal surface (6) of the cover (5);
- at least one transfer element (9) arranged between the excitation surface (8) and the internal surface (6) of the cover (5);
- first fastening means (10) arranged between the at least one transfer element (9) and the internal surface (6) of the cover (5) over the backrest surface (3) and/or the headrest surface (4);
the sound-emitting system being **characterized in that** the at least one transfer element (9) comprises a front face (26) set up to face the internal surface (6) of the cover (5), a rear face (14) set up to face and contact the excitation surface (8) of the at least one actuator (7), and a peripheral edge (15) arranged between the front face (26) and the rear face (14), wherein either the rear face (14) or the peripheral edge (15) is isolated from the filling material (11).

2. The sound-emitting system according to Claim 1, **characterized in that** the first fastening means (10) are set up to keep the at least one transfer element (9) and the internal surface (6) of the cover (5) that is over the backrest surface (3) and/or the headrest surface (4) in contact.

3. The sound-emitting system according to Claim 1, **characterized in that** the at least one transfer element (9) is isolated, at least partially, from the filling material (11).

4. The sound-emitting system according to Claim 1, **characterized in that** the at least one actuator (7) comprises a rear surface (13) facing the cavity (12) of the filling material (11), the rear surface (13) of the at least one actuator (7) being isolated, at least partially, from the filling material (11).

5. The sound-emitting system according to Claim 1, **characterized in that** the rear face (14) of the at least one transfer element (9) comprises at least one fastening tab (16) set up to be housed in a recess (17) of the cavity (12) of the filling material (11) and to position, at least temporarily, the transfer element (9) and the actuator (7) regarding the cavity (12) of the filling material (11).

6. The sound-emitting system according to Claim 1, **characterized in that** the filling material (11) comprises at least one projection arranged on the wall defining the cavity (12) and set up to allow the support of the peripheral edge (15) of the at least one transfer element (9) and to position the transfer element (9) and the actuator (7) regarding the cavity (12) of the filling material (11).

7. The sound-emitting system according to any of the preceding claims, **characterized in that** it further comprises a protective layer (20) for the first fastening means (10), wherein the protective layer (20) is set up to be removable from the first fastening means (10) once the internal surface (6) of the cover (5) that is over the backrest surface (3) and/or the headrest surface (4) has been arranged over the first fastening means (10).

8. The sound-emitting system according to Claim 7, **characterized in that** the protective layer (20) comprises a first section (21) set up to be arranged, in a removable way, over the first fastening means (10), and a second section (22) set up to remain accessible through the cover (5).

9. The sound-emitting system according to Claim 8, **characterized in that** the protective layer (20) further comprises a third section (23) set up to be temporarily secured to the filling material (11) of the seat.

10. The sound-emitting system according to Claim 8, **characterized in that** the first section (21) is set up not to remain joined to the first fastening means (10).

11. A procedure for installing a sound-emitting system, **characterized in that** it comprises:
- a step of arranging at least one transfer element (9) facing and in contact with an excitation surface (8) of at least one actuator (7), the at least one actuator (7) being set up to emit sound;
- a step of arranging the at least one actuator (7) and the at least one transfer element (9) in a cavity (12) of a filling material (11) of a backrest (3) and/or a headrest (4) of a seat (1);
- a step of placing first fastening means (10) on the at least one transfer element (9) or on an internal surface (6) of a cover (5), said cover (5) over the backrest surface (3) and/or the headrest surface (4);
- a step of placing a protective layer (20) over the first fastening means (10), the protective layer (20) being set up to be removable from the first fastening means (10), the step of placing the protective layer (20) being performed prior to the step of assembling the cover (5) over the backrest surface (3) and/or the headrest surface (4) of the seat (1);
- a step of assembling the cover (5) on the backrest surface (3) and/or the headrest surface (4) of the seat (1); and
- a step of joining the at least one transfer element (9) and the internal surface (6) of the cover (5) of the backrest surface (3) and/or headrest surface (4) by means of the first fastening means (10) once the protective layer (20) has been removed.

12. The procedure for installing the sound-emitting system according to Claim 11, **characterized in that** the step of arranging the at least one actuator (7) and the at least one transfer element (9) in the seat (1) comprises a step of coupling at least one fastening tab (16) of the at least one transfer element (9) into a recess (17), said recess (17) being arranged in a cavity (12) of a filling material (11) of the backrest (3) and/or headrest (4), the cavity (12) being set up to house the at least one actuator (7).

13. The procedure for installing the sound-emitting system according to Claim 11, **characterized in that** the step of arranging the at least one actuator (7) and the at least one transfer element (9) in the seat (1) comprises a step of supporting a peripheral edge (15) of the at least one transfer element (9) on at least one projection of a filling material (11) of the backrest (3) and/or headrest (4), the peripheral edge (15) being arranged between a front face (26) and a rear face (14) of the transfer element (9), the front face (26) being set up to face the internal surface (6) of the cover (5), and the rear face (14) being set up to face the excitation surface (8) of the at least one actuator (7).

14. The procedure for installing the sound-emitting system according to any of Claims 11 to 13, **characterized in that** the step of placing the protective layer (20) over the first fastening means (10) further comprises a step of temporarily securing a third section of the protective layer (20) to the filling material (11) of the seat (1).

15. The procedure for installing the sound-emitting system according to Claim 14, **characterized in that** the step of placing the protective layer (20) over the first fastening means (10) further comprises a step of placing a second section of the protective layer (20) over a first section of the protective layer (20) such that the second section is arranged between the internal surface (6) of the cover (5) and the first section, and the first section is arranged between the second section and the first fastening means (10).
